Europäisches Patentamt

European Patent Office

Office européen des brevets

(19)

(11) Veröffentlichungsnummer: **0 110 163**
A1

(12) **EUROPÄISCHE PATENTANMELDUNG**

(21) Anmeldenummer: 83110833.7

(22) Anmeldetag: 28.10.83

(51) Int. Cl.³: **G 03 B 41/18**

(30) Priorität: 18.11.82 DE 3242639

(43) Veröffentlichungstag der Anmeldung: **13.06.84**
**Patentblatt 84/24**

(84) Benannte Vertragsstaaten: **DE FR**

(71) Anmelder: **SIEMENS AKTIENGESELLSCHAFT, Berlin und München Wittelsbacherplatz 2, D-8000 München 2 (DE)**

(72) Erfinder: **Finkenzeller, Johann, Herringstrasse 8, D-8520 Erlangen (DE)**
Erfinder: **Hubert, Günter, Wellerstädter Weg 28, D-8523 Baiersdorf (DE)**

(54) **Röntgenfilmkassette.**

(57) Die Erfindung betrifft eine Röntgenfilmkassette mit einem Kassettenboden (1) zur Aufnahme des Röntgenfilmes (6) und von am Film (6) anliegenden Verstärkerfolien (7, 8) und mit einem Deckel (2) zum Verschließen der Kassette. Der Boden (1) und der Deckel (2) sind allseitig mit zueinander passenden Nuten (3) und Ansätzen (4) versehen, so daß der Deckel (2) durch die so gebildete Führung gegen den Boden (1) verschiebbar und in geschlossenem Zustand allseitig formschlüssig mit dem Boden (1) verbunden ist. Mit dem Deckel (2) ist ein in einer Hülle (9) aus luftdichtem Material liegendes Schaumstoffkissen (10) über die Hüllenwand verbunden, das sich etwa über die gesamte Filmoberfläche erstreckt. Die Hülle (9) und der Deckel (2) sind mit miteinander fluchtenden Öffnungen (11, 12) zum Evakuieren des Hülleninneren versehen. Nach dem Evakuieren kann demgemäß die Kassette geöffnet werden.

0110163

SIEMENS AKTIENGESELLSCHAFT          Unser Zeichen
Berlin und München                 VPA **82 P 3 8 1 9 E**

Röntgenfilmkassette

Die Erfindung betrifft eine Röntgenfilmkassette mit einem Kassettenboden zur Aufnahme des Röntgenfilmes und von am Film anliegenden Verstärkerfolien, mit einem Deckel zum Verschließen der Kassette sowie mit Mitteln zum Anpressen der Verstärkerfolien an den Film.

Bei einer Röntgenfilmkassette besteht die Forderung, daß die in der Kassette liegenden Verstärkerfolien gut an den Film angepreßt werden. Bei den üblichen Kassetten sind der Boden und der Deckel scharnierartig verbunden. Die Anpressung erfolgt beim Schließen der Kassette, wobei ein elastisches Medium, z. B. Schaumgummi, für den Toleranzausgleich und eine Druckverteilung auf die ganze Filmfläche sorgt. Bei großen Kassetten verbiegen sich dabei der Kassettenboden und der Deckel, bedingt durch die - wegen der großen Fläche - große Anpreßkraft, so stark, daß bei einer solchen Konstruktion keine einwandfreie Anpressung garantiert werden kann.

Die wirkungsvollste Maßnahme zur Vermeidung dieses Nachteiles wäre, die Anpressung durch den atmosphärischen Druck gleichmäßig über die ganze Fläche zu bewerkstelligen, d. h. die Kassette zu evakuieren (DE-OS 22 14 613). Die für eine solche Kassette notwendigen Dichtungen können aber im praktischen Betrieb das Vakuum nicht lange genug aufrechterhalten. Die Kassetten müßten jeweils kurz vor ihrer Benutzung evakuiert werden, was umständlich und zeitraubend ist.

Tp 2 Ler / 04.11.1982

Der Erfindung liegt die Aufgabe zugrunde, eine Röntgenfilmkassette der eingangs genannten Art zu schaffen, bei der eine gleichmäßige, feste Anpressung der Verstärkerfolien an den Röntgenfilm erfolgt, wobei die Handhabung einfach und zeitsparend ist.

Diese Aufgabe ist erfindungsgemäß dadurch gelöst, daß der Boden und der Deckel allseitig mit zueinander passenden Nuten und Ansätzen versehen sind, derart, daß der Deckel durch eine so gebildete Führung gegen den Boden verschiebbar und in geschlossenem Zustand allseitig formschlüssig mit dem Boden verbunden ist, daß mit einem Kassettenteil ein in einer Hülle aus luftdichtem Material liegendes Schaumstoffkissen über die Hüllenwand verbunden ist, das sich etwa über die gesamte Filmoberfläche erstreckt und daß die Hülle und die Wand, an der die Hülle befestigt ist, mit miteinander fluchtenden Öffnungen zum Evakuieren des Hülleninneren versehen ist. Wird das Hülleninnere evakuiert, so schrumpft die Hülle mit dem Schaumstoffkissen und die Kassette kann geöffnet werden. Verschwindet der Unterdruck im Inneren der Hülle, so dehnt sich das Schaumstoffkissen wieder aus und preßt gleichmäßig die Verstärkerfolien an den Röntgenfilm an. Die formschlüssige Verbindung zwischen Boden und Deckel verhindert dabei eine Verwindung der Kassette.

Eine zweckmäßige Ausgestaltung der Erfindung besteht darin, daß am Kassettendeckel oder -boden ein Riegel federnd gelagert ist, dem eine Öffnung am anderen Kassettenteil zugeordnet ist und der durch das Schaumstoffkissen verstellbar ist. Dieser Riegel verhindert ein unbeabsichtigtes Öffnen der Kassette.

Die Erfindung ist nachfolgend anhand eines in der Zeichnung dargestellten Ausführungsbeispieles näher
erläutert. Es zeigen:

Fig. 1 und 2 einen Quer- und Längsschnitt durch
eine Röntgenfilmkassette nach der
Erfindung,

Fig. 3 einen Teilausschnitt aus einer Variante
der Röntgenfilmkassette gemäß den Figuren
1 und 2,

Fig. 4 einen Schnitt nach der Linie IV-IV in Figur 3, und

Fig. 5 ein System zum Öffnen und Schließen von
Filmkassetten gemäß den Figuren 1 bis 4.

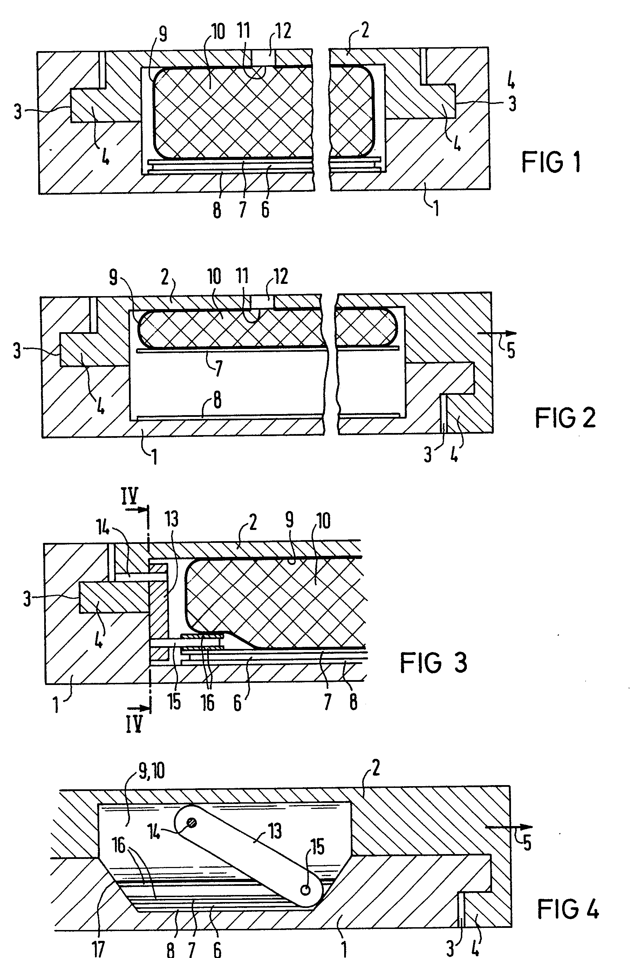

In den Figuren 1 und 2 sind der Boden 1 und der Deckel 2
einer Röntgenfilmkassette dargestellt. Es ergibt sich,
daß der Boden 1 mit Nuten 3 und der Deckel 2 mit Ansätzen 4 versehen ist, die im geschlossenen Zustand
der Kassette formschlüssig ineinander greifen. Demgemäß kann die in den Figuren 1 und 2 dargestellte geschlossene Kassette durch Zug auf den Deckel 2 in Richtung des Pfeiles 5 geöffnet werden. Die Nuten 3 und Ansätze 4 bilden eine Führung, die eine Verschiebung des
Deckels 2 gegenüber dem Boden erlaubt und im geschlossenen Zustand eine allseitig formschlüssige Verbindung
zwischen Boden 1 und Deckel 2 sicherstellt.

Im Innenraum der Kassette liegt ein Röntgenfilm, der
in der Figur 1 mit 6 bezeichnet ist, zwischen zwei Verstärkerfolien 7, 8. Die obere Verstärkerfolie 7 ist an
einer Hülle 9 aus luftundurchlässigem Material befestigt,
die ein Schaumstoffkissen 10 umschließt und an der Innenseite des Deckels 2 befestigt, z. B. angeklebt, ist. Die Hülle 9 mit dem Schaumstoffkissen 10 erstreckt sich etwa über die gesamte Oberfläche der Verstärkerfolien 7, 8 und des Röntgenfilmes 6. Die Hülle 9 und der Deckel 2 sind mit miteinander fluchtenden Öffnungen 11, 12 versehen.

Soll die Kassette aus ihrem in der Figur 1 dargestellten geschlossenen Zustand geöffnet werden, so wird durch die Öffnung 12 die Luft aus dem Innenraum der Hülle 9 abgesaugt. Dadurch wird das Schaumstoffkissen 10 in der Hülle 9 zusammengedrückt, so daß sich der Abstand zwischen den Verstärkerfolien 7 und 8 vergrössert, wie dies in der Figur 2 dargestellt ist. Die Figur 2 zeigt der Übersichtlichkeit halber den Röntgenfilm 6 nicht. Nach dem Evakuieren des Innenraumes der Hülle 9 kann die Kassette zum Austausch eines belichteten Röntgenfilmes gegen einen unbelichteten durch Zug auf den Deckel 2 in Richtung des Pfeiles 5 geöffnet und danach durch Bewegung des Deckels 2 entgegen dem Pfeil 5 wieder geschlossen werden.

Die Figuren 3 und 4 zeigen eine Verriegelungsvorrichtung für die Kassette im geschlossenen Zustand. Diese Verriegelungsvorrichtung besteht aus einem Hebel 13, der um eine Achse 14 im Deckel 2 schwenkbar gelagert und mit einem Ansatz 15 zwischen zwei Leisten 16 geführt ist. Die Leisten 16 werden normalerweise, d. h. bei nicht evakuiertem Innenraum der Hülle 9, durch das Schaumstoffkissen 10 gegeneinander und gegen die Verstärkerfolie 7 gedrückt, so daß der Hebel 13 die in den Figuren 3 und 4 gezeigte Stellung einnimmt. Er liegt dabei in einer trapezförmigen Aussparung 17 des Bodens 1. Wird demgemäß in Richtung des Pfeiles 5 am Deckel 2 gezogen, so stößt der Hebel 13 an der in der Figur 4 rechten Begrenzung der Aussparung 17 an und verhindert ein Öffnen der Kassette. Wird dagegen der Innenraum der Hülle 9 evakuiert und diese und das Schaumstoffkissen 10 zusammengedrückt, so kann eine nicht dargestellte Feder, die auf den Hebel 13 entgegen dem Uhrzeigersinn wirkt, den Ansatz 15 so weit nach oben bewegen, daß der Hebel 13 nicht mehr an der rechten Begrenzung der Aussparung 17 anliegt und die Kassette geöffnet werden kann.

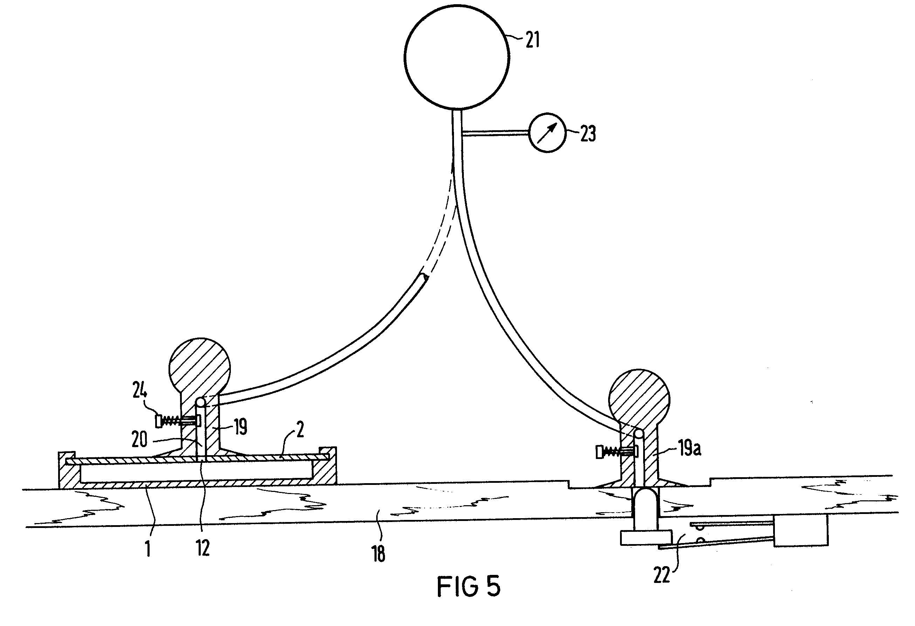

Die Figur 5 zeigt eine Kassette gemäß den Figuren 1 bis 4 auf einer Unterlage 18 in schematischer Darstellung. Zum Öffnen der Kassette wird ein aus Gummi bestehender Saugnapf 19 so auf den Deckel 2 der Kassette aufgelegt, daß seine Saugöffnung 20 mit der Öffnung 12 des Deckels 2 fluchtet. Eine Saugpumpe 21 ist dabei durch Wegnahme des Saugnapfes 19 aus seiner Parkstellung 19a über einen Schalter 22 automatisch eingeschaltet worden und evakuiert in der geschilderten Weise den Innenraum der Hülle 9. Die Kassette kann anschließend durch Zug auf den Deckel 2 mit Hilfe des Saugnapfes 19 geöffnet werden. Ein Manometer 23 zeigt den Druck an, so daß der Benutzer weiß, wann die Kassette geöffnet werden kann. Anschließend kann die Kassette wieder geschlossen werden. Ein handbetätigbares Ventil 24 erlaubt es, den Unterdruck aufzuheben, so daß nach dem Schließen der Kassette der Saugnapf 19 wieder in seine Parkstellung zurückbewegt werden kann.

3 Patentansprüche
5 Figuren

Patentansprüche

1. Röntgenfilmkassette mit einem Kassettenboden (1) zur Aufnahme des Röntgenfilmes (6) und von am Film (6) anliegenden Verstärkerfolien (7, 8) mit einem Deckel (2) zum Verschließen der Kassette sowie mit Mitteln (9, 10) zum Anpressen der Verstärkerfolien (7, 8) an den Film (6), d a d u r c h   g e k e n n z e i c h n e t , daß der Boden (1) und der Deckel (2) allseitig mit zueinander passenden Nuten (3) und Ansätzen (4) versehen sind, derart, daß der Deckel (2) durch eine so gebildete Führung gegen den Boden (1) verschiebbar und im geschlossenen Zustand allseitig formschlüssig mit dem Boden (1) verbunden ist, daß mit einem Kassettenteil (2) ein in einer Hülle (9) aus luftdichtem Material liegendes Schaumstoffkissen (10) über die Hüllenwand verbunden ist, das sich etwa über die gesamte Filmoberfläche erstreckt, und daß die Hülle (9) und die Wand (2), an der die Hülle (9) befestigt ist, mit miteinander fluchtenden Öffnungen (11, 12) zum Evakuieren des Hülleninneren versehen sind.

2. Röntgenfilmkassette nach Anspruch 1, d a d u r c h   g e k e n n z e i c h n e t ,  daß die Hülle (9) mit dem Schaumstoffkissen (10) am Kassettendeckel (2) befestigt ist.

3. Röntgenfilmkassette nach Anspruch 1 oder 2, d a d u r c h   g e k e n n z e i c h n e t ,  daß am Kassettendeckel (2) oder -boden (1) ein Riegel (13) federnd gelagert ist, dem eine Öffnung (17) am anderen Kassettenteil (1) zugeordnet und der durch das Schaumstoffkissen (10) verstellbar ist.

FIG 1

FIG 2

FIG 3

FIG 4

FIG 5

82 P 3819

Europäisches Patentamt

**EUROPÄISCHER RECHERCHENBERICHT**

0110163

Nummer der Anmeldung

EP 83 11 0833

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| Y | DE-A-2 438 278 (ILFORD)<br>* Anspruch 1; Abbildungen 1,2 * | 1,3 | G 03 B 41/18 |
| Y | GB-A-1 453 048 (CIBA-GEIGY)<br>* Insgesamt * | 1,2 | |
| Y | US-A-3 860 826 (SOMERSET)<br>* Spalte 2, Zeilen 56-64 * | 1,2 | |
| A | US-A-4 063 102 (RONCI)<br>* Abbildung 8 * | 1 | |
| | ----- | | **RECHERCHIERTE SACHGEBIETE (Int. Cl. ³)**<br><br>G 03 B 41/18 |

Der vorliegende Recherchenbericht wurde für alle Patentansprüche erstellt.

| Recherchenort | Abschlußdatum der Recherche | Prüfer |
|---|---|---|
| DEN HAAG | 10-02-1984 | MEES G. |